## Europäisches Patentamt

## European Patent Office

## Office européen des brevets

(11) Veröffentlichungsnummer: **0 234 371 B1**

(12) **EUROPÄISCHE PATENTSCHRIFT**

(45) Veröffentlichungstag der Patentschrift:
28.06.89

(51) Int. Cl.⁴: **B65B 9/04**, B65B 59/00, B29C 51/18

(21) Anmeldenummer: 87101680.4

(22) Anmeldetag: 06.02.87

(54) Verpackungsmaschine mit Folienbanddurchlauf zum kontinuierlich taktweisen Ausformen, Füllen, Verschliessen und mindestens gruppenweise Vereinzeln von Bechern.

(30) Priorität: 24.02.86 DE 3605864

(43) Veröffentlichungstag der Anmeldung:
02.09.87 Patentblatt 87/36

(45) Bekanntmachung des Hinweises auf die Patenterteilung:
28.06.89 Patentblatt 89/26

(84) Benannte Vertragsstaaten:
AT BE CH FR GB IT LI NL SE

(56) Entgegenhaltungen:
FR-A- 1 553 553
FR-A- 2 302 919
FR-A- 2 308 484

(73) Patentinhaber: Hassia Verpackungsmaschinen GmbH,
Postfach 1120, D-6479 Ranstadt 1(DE)

(72) Erfinder: Walter, Kurt, Königsberger Strasse 8-10,
D-6475 Glauburg(DE)

(74) Vertreter: Wolf, Günter, Dipl.Ing. et al, Patentanwälte
Dipl.-Ing. Amthor Dipl.-Ing. Wolf Postfach 70 02 45 An
der Mainbrücke 16, D-6450 Hanau 7(DE)

## Beschreibung

Die Erfindung betrifft eine Verpackungsmaschine mit Folienbanddurchlauf zum kontinuierlich taktweisen Ausformen, Füllen, Verschließen und mindestens gruppenweise Vereinzeln von Bechern gemäß Oberbegriff des Hauptanspruches.

Eine Verpackungsmaschine der eingangs genannten Art ist bspw. nach der DE-A-20 52 551 bekannt, die die Besonderheit aufweist, daß das Formwerkzeug mit dem durchlaufenden Folienband eine bestimmte Strecke mitläuft und dann wieder zurückgestellt wird. Bei derartigen Verpackungsmaschinen durchläuft ein warmverformbares Folienband, von geeigneten Transportelementen bewirkt, die ganze Maschine, d.h., in das entsprechend vorgewärmte Folienband werden zunächst die Becher per Tiefziehen eingeformt, mit dem Produkt gefüllt, danach abgedeckelt und versiegelt, wonach die Becher einzeln oder in zusammenhängenden Gruppen vom Folienband abgetrennt werden. Diese Technik wird allgemein praktiziert und ist praktisch im Prinzip nicht verbesserbar. Die Produkte, bspw. Joghurt, Pudding, Sahne, Säfte od. dgl., sind dabei in der Regel in großer Menge und bezüglich der Becher in riesigen Stückzahlen zu verarbeiten, die mit derartig bekannten Maschinen auch ohne weiteres bewältigbar sind. Allerdings kann mit diesen Maschinen jeweils immer nur ein Produkt verarbeitet werden und zwar sowohl hinsichtlich des Produkttyps, der Becherform, der Dekorausstattung und der jeweiligen Becherfüllmenge. Soll ein anderes Produkt verarbeitet werden, muß die Verpackungsmaschine hinsichtlich der genannten Parameter entsprechend umgestellt werden. Erst dann kann die Maschine für eine andere Charge benutzt werden, sofern man nicht für jedes Produkt eine für dieses bestimmte Maschine bereitstellt. Unabhängig von dieser Situation beim Produkt- und Verpackungshersteller sieht die Situation beim produktvertreibenden Handel in Rücksicht auf eine breite Angebotspalette so aus, daß die Händler in der Regel Produktchargen bestellen, die sich bspw. aus unterschiedlichen Produktarten von Joghurts od. dgl. zusammensetzen mit ggf. auch unterschiedlichen Füllmengen in den Einzelbehältern, die auch unterschiedliche Größen und Formen haben können. Diesen Handelsanforderungen kann der Verpackungshersteller und Abfüller (bspw. Molkereien) nur durch eine ausreichend große Kühllagerungshaltung genügen, die es ihm ermöglicht, die abgerufenen Chargen mit den unterschiedlichen Produktkomponenten ab Lager zusammenzustellen und auszuliefern, da er keine Verpackungs- und Abfüllmaschine zur Verfügung hat, die in der Lage wäre, sogleich die kundenspezifische Charge mit ihren Produkteinzelkomponenten herzustellen. Das ganze bisher benutzte Herstellungs- und Liefersystem ist zwar ohne weiteres und problemlos computerisierbar und wird auch bei entsprechend großem Herstellungs- und Liefervolumen praktiziert, ist aber nur mit einem entsprechend großen Investitionsaufwand für die Kühllagerung, Bestellchargenzusammenstellung u. dgl. verbunden. Hinzu kommt, daß ein Kühllager immer mehr oder weniger mit den verschiedensten Produktkomponenten gefüllt sein muß, um alle Zusammenstellungswünsche für Bestellchargen der Kunden befriedigen zu können. Außerdem ist dadurch eine unmittelbare Auslieferung gerade frisch abgepackter Produkte nicht möglich, da, wie gesagt, die Auslieferung nur ab Lager erfolgen kann. Eine Änderung dieses zwar weitgehend rationalisierten, aber aufwendigen Systems scheitert praktisch daran, daß mit den derzeit verfügbaren Verpackungsmaschinen der eingangs genannten Art praktisch immer nur auf Lager gearbeitet werden kann, und eine Auslieferung einer Charge unmittelbar ab Maschine nur dann möglich wäre, wenn die abgerufene Charge nur ein bestimmtes Produkt umfaßt.

Der Erfindung liegt demgemäß die Aufgabe zugrunde, eine Verpackungsmaschine der eingangs genannten Art dahingehend zu verbessern, daß man auf einer solchen Maschine unmittelbar nacheinander unterschiedliche Produktkomponenten fahren kann, d.h., die Maschine soll derart ausgebildet sein, daß von ihr eine in Auftrag gegebene Liefercharge, die unterschiedliche Produktkomponenten enthalten soll, unmittelbar hergestellt und damit, wenn gewünscht, auch unmittelbar im frisch abgefüllten Zustand ausgeliefert werden kann.

Diese Aufgabe ist mit einer Verpackungsmaschine der eingangs genannten Art nach der Erfindung durch die im Kennzeichen des Hauptanspruches angeführten Merkmale gelöst. Vorteilhafte Weiterbildungen ergeben sich nach den Unteransprüchen.

Der Aufwand für die Fertigung einer derart ausgebildeten Verpackungsmaschine ist zwar größer als der für eine herkömmliche Verpackungsmaschine einschlägiger Art, steht aber in keinem Verhältnis zum Aufwand, der für das vorerwähnte Lager- und Ausliefersystem notwendig ist, ganz abgesehen davon, daß eine derartige Maschine die Auslieferung der hergestellten Charge mit unterschiedlichen Produktkomponenten praktisch unmittelbar nach deren Herstellung ermöglicht. Die erfindungsgemäße Maschine, die hinsichtlich der Gestaltung ihrer Einzelstationen auf im Verpackungsmaschinenbau bekannte Konstruktionen und Konstruktionselemente gestützt ist, hat also ihre wesentliche und vorteilhafte Bedeutung für das nachfolgende Lagerungs- und Auslieferungssystem, das aufgrund der erfindungsgemäßen Ausbildung der Verpackungsmaschine nunmehr geändert, wesentlich vereinfacht und auch hinsichtlich der damit verbundenen Kosten reduziert werden kann.

Soweit sich das Dekor der mit einer solchen Maschine hergestellten Packungen nicht nur auf die Deck- bzw. Verschlußfolie bezieht, kann die Verpackungsmaschine auch derart ausgebildet werden, daß im Bereich der Tiefziehstation neben der Durchlaufstrecke mehrere in der Zahl der Anzahl der Becherformengruppen entsprechende Etikettierungseinrichtungen angeordnet und diese wahlweise in die gleiche Tiefziehstellung einstellbar ausgebildet sind. Um durch eine derartige Anordnung eine entsprechende Verlängerung der Verpackungsmaschine zu vermeiden, werden die Etikettiereinrichtungen beidseitig zur Foliendurchlaufstrecke angeordnet und zwar in der Weise, daß die jeweilige Etikettier- bzw. Dekoranbringungseinrichtung für die Seitenwandung der Becher in den Anbringungsbereich verstellt werden kann, was noch näher erläutert wird. Ansonsten können für diese Einrichtungen durchaus herkömmliche Etikettier- oder Banderoliervorrichtungen verwendet werden.

Bezüglich der in entsprechender Anzahl vorgesehenen Füllstationen können dafür zwar auch herkömmliche Fülldosierpumpen vorgesehen werden, um aber ggf. längere Standzeiten der Produkte in Fülldosierpumpen zu vermeiden, werden im vorliegenden Fall ebenfalls bekannte, aber einfachere Füllsysteme bevorzugt, bei denen die Füllstationen durch die Enden der Produktleitungen gebildet und in den Enden automatisch betätigbare Füllventile angeordnet sind.

Gleiches gilt praktisch auch für die in entsprechender Anzahl anzuordnenden Abdeckeleinrichtungen, die im vorliegenden Fall bevorzugt aus Deckelfolienvorratsschächten gebildet sind, wobei zwischen diesen und der Foliendurchlaufstrecke Abnahme- und Übergabeelemente für die jeweils eine ganze Bechergruppe abdeckenden Deckfolienzuschnitte angeordnet sind.

Eine weitere vorteilhafte Ausbildung besteht darin, daß die in Gruppen volumenunterschiedlichen Becherformen des Formwerk zeuges in bezug auf die Versiegelungsfläche jedes Einzelbechers und bezogen auf deren Ausschnittsform gleich ausgebildet sind.

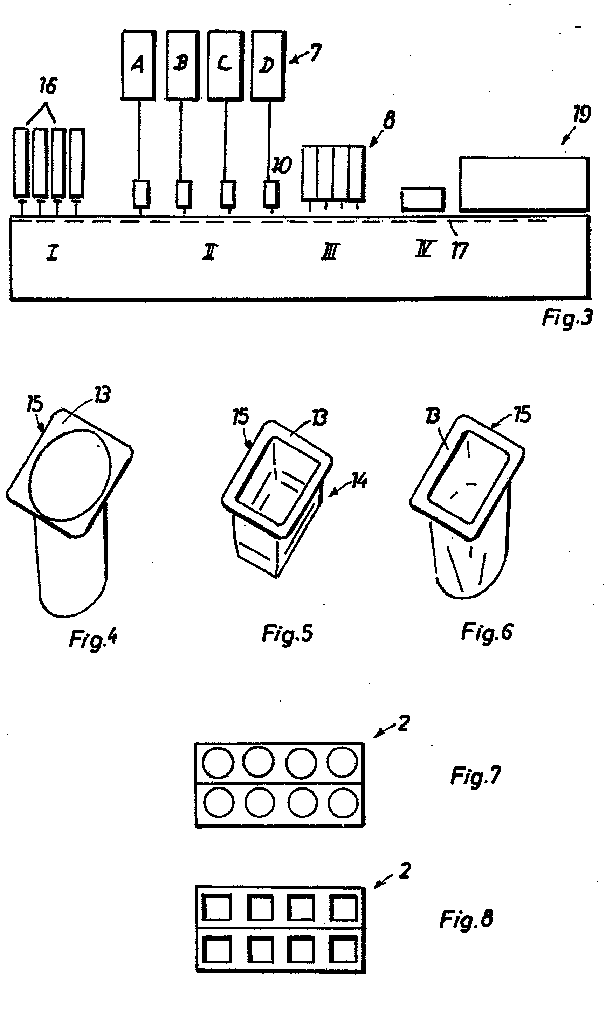

Was das Formwerkzeug in der Tiefziehstation betrifft, so könnten die einzelnen Becherformgruppen zwar aus in die Tiefziehstellung verstellbaren Schiebern bestehen, was aber mit einem beträchtlichen Antriebs- und Führungsaufwand verbunden wäre. Außerdem ergäben sich diesbezüglich Raumprobleme in dem Falle, wo die Maschine mit den vorerwähnten Dekoranbringungseinrichtungen versehen wäre, was in der Regel der Fall sein wird. Aus diesem Grunde wird die Verpackungsmaschine bevorzugt derart ausgebildet, daß das mindestens zwei Becherformgruppen aufweisende Formwerkzeug in Form einer mit jeweils einer Gruppe in Tiefziehstellung schwenkbaren, drehbar gelagerten und auf- und abbewegbaren Trommel ausgebildet ist. Derartige, mit Bechergruppen versehene Trommeln bzw. sogenannte Vierfach-Rotoren sind zwar nach Verpackungsrundschau 11/1984, Seite 1513, Abb. 6 bekannt, hierbei haben aber die Becherformen in allen Gruppen die gleiche Gestalt und außerdem handelt es sich um ein Werkzeug, um aus einer kontinuierlich im Takt zulaufenden Folie unmittelbar Einzelbecher herzustellen, die in der Endstellung des Vierfach-Rotors ausgestoßen und abgestapelt werden, um sie erst dann gestapelt einer entsprechenden Füllmaschine zuzuführen. In Rücksicht auf diese ebenfalls bekannte Bechervorfertigung und anschließende Befüllung der als Fertigbecher in eine entsprechende Verpackungsmaschine eingebrachten Becher, kann natürlich auch die Tiefziehstation durch eine entsprechende Anzahl von Bechermagazinen ersetzt werden, wobei jedes Bechermagazin eine andere Art von Bechern beinhaltet, die bspw. unterschiedliche Volumen haben. Bei dieser Variante läuft dann durch die Maschine kein Folienband hindurch, sondern dieses ist durch die bereits im ausgeformten Zustand aufgegebenen Becher ersetzt, wofür der Folienbanddurchlauf in Form eines Bechertrag- und -förderelementes ausgebildet ist. Auch bei einer solchen Ausbildung und Betriebsart ist das er findungsgemäße Prinzip in äquivalenter Weise zu verwirklichen, das sich vom vorbeschriebenen im wesentlichen nur dadurch unterscheidet, daß hierbei die Becher nicht unmittelbar in die durch die Maschine durchlaufende Folie eingeformt, sondern als Fertigbecher in die Maschine eingegeben werden.

Hinsichtlich ihrer Steuerung bedarf die Verpackungsmaschine keiner näheren Erläuterung, da auch eine derartig ausgebildete Maschine ohne weiteres einer elektronischen und entsprechend programmierbaren Steuerung zugänglich ist, wie diese schon bei Verpackungsmaschinen der eingangs genannten Art zur Anwendung kommt. Diese vorbekannten Steuerungen und Programme sind nur dahingehend zu erweitern, daß damit je nach Steuereingabe, die entsprechend gewünschte Formwerkzeuggruppe bzw. der entsprechende Bechervorratsschacht in Wirkstellung gebracht wird und infolge davon auch die zugehörigen Produktvorratsbehälter und die jeweilige Füllstation und ferner die jeweilige Einrichtung zum Abdeckeln. Sofern eine Computerverbindung zwischen Hersteller und Kunden besteht, kann dabei ohne weiteres in Betracht gezogen werden, daß der Abnehmer seine Chargenbestellung mit den unterschiedlichen Produktkomponenten entsprechend verschlüsselt direkt an den Verpackungsmaschinen-Computer weitergibt und damit, erforderlichenfalls unter Zwischenschaltung einer Speicherung, die Verpackungsmaschine direkt mit der gewünschten Bestellung beauftragt.

Die erfindungsgemäße Verpackungsmaschine wird nachfolgend anhand der zeichnerischen Darstellung von Ausführungsbeispielen näher erläutert.

Es zeigt schematisch

Fig. 1 eine Seitenansicht der Verpackungsmaschine;
Fig. 2 eine Draufsicht auf die Verpackungsmaschine gemäß Fig. 1;
Fig. 3 eine Seitenansicht der Verpackungsmaschine für die Verarbeitung von Fertigbechern und
Fig. 4 - 8 Ausführungsformen von Bechern bzw. Bechergruppen.

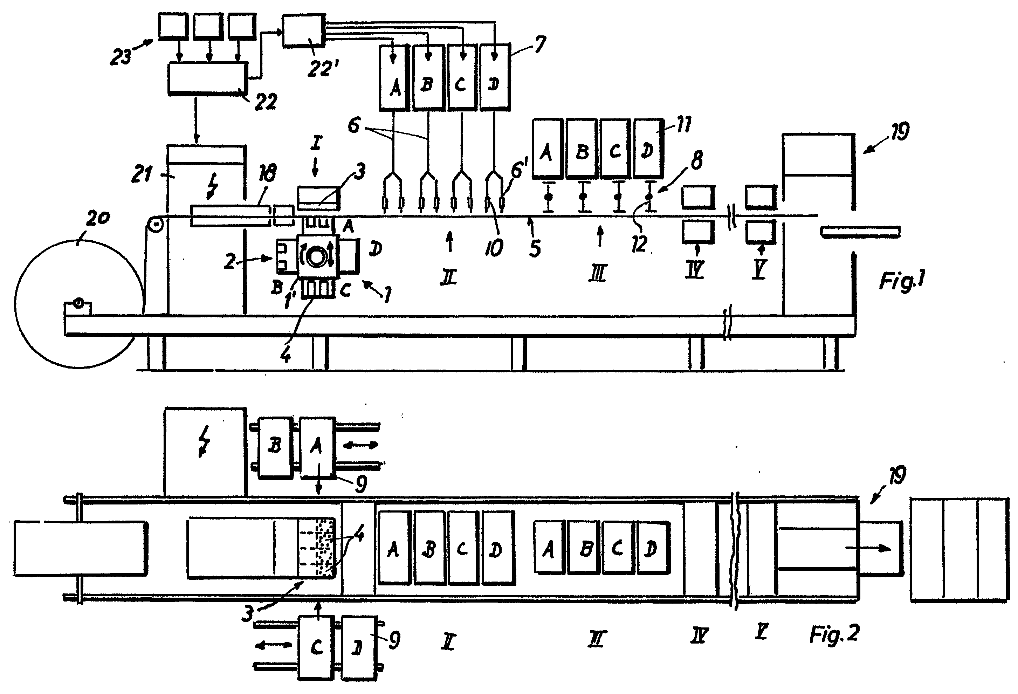

Wie aus den Fig. 1, 2 erkennbar, besteht die Verpackungsmaschine aus längs der Durchlaufstrecke 5 für das Folienband angeordneten Tiefzieh-, Füll-, Abdeckel-, Siegel- und Vereinzelungsstationen I - V. Beim Ausführungsbeispiel nach Fig. 1, 2 ist die Tiefziehstation I mit einem Formwerkzeug 1 ausgestattet, das mehrere Gruppen 2 volumenunterschiedlicher, wahlweise automatisch in die Tiefziehstellung 3 bringbare Becherform 4 aufweist. Das hierbei dargestellte Formwerkzeug 1 ist dabei mit vier Becherformgruppen 2 ausgestattet und in Form einer mit jeweils eine Gruppe 2 in Tiefziehstellung 3 schwenkbaren und drehbar gelagerten und auf- und abbewegbaren Trommel 1' ausgebildet. Innerhalb einer Gruppe haben die Becherformen 4 jeweils gleiche Form und Gestalt. Für den Durchlauf jeweils einer Produktkomponente bleibt die betreffende Becherformgruppe 2 jeweils in der Tiefziehstellung 3 und wird erst durch Drehen des Formwerkzeuges 1 bzw. der Trommel 1' durch eine andere Gruppe 2 ersetzt.

Bei der Ausformung der Becher in der Tiefziehstation I, vor der die von einer Vorratsrolle 20 abgezogene Folie eine Vorwärmstation 18 durchläuft, bewegt sich das Formwerkzeug 1 auf und ab, um die jeweils ausgeformten Becher für den Weitertransport freizustellen. Hinter der Tiefziehstation I sind mehrere, wahlweise und automatisch betätigbare, in der Zahl der Becherformgruppenanzahl entsprechende Füllstationen II hintereinander über der Durchlaufstrecke 5 angeordnet. Die Produktzuleitungen 6 führen zu einer entsprechenden Anzahl von Produktvorratsbehältern 7. Da im Ausführungsbeispiel am Formwerkzeug 1 vier Becherformgruppen 2 vorgesehen sind, sind ebenfalls vier Produktvorratsbehälter 7 vorgesehen, wobei sich die Produktzuleitungen 6 im Bereich der Füllstation II und bei einer Gruppenanordnung der ausgeformten Becher im Sinne der Fig. 7, 8 gabeln und jedes der acht Enden 6' der Produktzuleitungen 6 mit einem automatisch betätigbaren Füllventil 10 versehen ist. Die hinter der Füllstation II angeordnete Abdeckelstation III weist ebenfalls vier der Becherformgruppenanzahl entsprechende Abdeckeleinrichtungen 8 auf, die ebenfalls wahlweise automatisch betätigbar ausgebildet sind. Diese Abdeckeleinrichtungen 8 bestehen aus jeweils einem Deckelfolienvorratsschacht 11, wobei zwischen diesen und der Foliendurchlaufstrecke 5 Abnahme- und Übergabeelemente 12 bekannter Art für die jeweils eine Bechergruppe abdeckenden Deckelfolien angeordnet sind. Die Abnahme- und Übergabeelemente 12 sind taktweise drehbare vierarmige Gebilde, an deren Enden Saugnäpfe angeordnet sind. An diese Abdeckelstation III schließt sich die Siegelstation IV und schließlich eine Vereinzelungsstation V an, die in Form einer Stanze ausgebildet ist, die die Bechergruppen 2 gemäß Fig. 7 oder 8 vom Strang abtrennt und in der auch Einrichtungen vorgesehen sind, die die ganze Bechergruppe mit Trennerleichterungen versieht, um damit das Ausbrechen bzw. Abtrennen einzelner oder mehrerer Becher aus einer im Angebot befindlichen Bechergruppe zu erleichtern. Nach Verlassen der Stanzstation V, was alles mit geeigneten, bekannten, hier aber nicht dargestellten Förderelementen geschieht, gelangen die Bechergruppen auf eine Stapelvorrichtung 19, auf der die ganze bestellte Charge aufgestapelt, auf eine Palette übernommen und ggf. sogleich verladen und abtransportiert werden kann. In einem solchen Palettenstapel können sich dabei aufgrund der Ausbildung der Maschine und je nach Umfang einer Bestellcharge Bechergruppen befinden, die entweder durchgehend mit dem gleichen Produkt oder die mit zwei, drei oder vier unterschiedlichen Produkten und Mengen gefüllt sein können.

Wenn im dargestellten Beispiel beispielsweise ein Produkt A abgefüllt und verpackt wird, steht demgemäß die Gruppe A der Trommel 1' in Tiefziehstellung 3. Für dieses Produkt A ist der Vorratsbehälter A mit seinen zugehörigen Füllventilen 10 in Tätigkeit, und in der Deckelstation III gilt dies für den ebenfalls mit A bezeichneten Deckelfolienvorratsschacht 11. Bei Wechsel auf ein Produkt B wird das Formwerkzeug 1, entsprechend gesteuert, im Uhrzeigersinn um 90° gedreht, so daß die mit B bezeichnete Bechergruppe in die Tiefziehstellung 3 gelangt, und entsprechend zeitverzögert tritt dann der mit B bezeichnete Deckelfolienvorratsschacht 11 in Tätigkeit. Vor- und Rückschaltungen und erforderlichenfalls auch Übersprünge sind dabei ohne weiteres möglich und von der Programmierung her gesehen problemlos beherrschbar, ebenso wie die notwendigen Zeitverzögerungen für das Tätigwerden der Vorratsbehälter 7 und der einzelnen Deckelfolienvorratsschächte 11, wenn ein Parameterwechsel erst einmal eingeleitet ist.

Wenn die Becher mit einem Seitenwanddekor versehen werden sollen, so ist auch dies mit entsprechenden und an sich bekannten Etikettier- bzw. Dekoreinrichtungen 9 möglich (Fig. 2), die aber in einer entsprechenden Anzahl vorhanden sein müssen. Da derartige Wandungsdekors während des Tiefziehens der Becher angebracht werden müssen, d.h. in der Tiefziehstellung 3, und eine Hintereinanderanordnung dieser Dekoreinrichtungen zu einer zusätzlichen Verlängerung der ganzen Maschine führte, sind diese Etikettiereinrichtungen 9/A-D, wie aus Fig. 2 ersichtlich, seitlich an beiden Seiten der Durchlaufstrecke 5 angeordnet und dort derart verschieblich gelagert, daß jede der vier Etikettiereinrichtungen 9/A-D fluchtend zur Tiefziehstellung 3 eingestellt werden kann. Beim dargestellten Ausführungsbeispiel in Fig. 2 ist beispielsweise die mit A bezeichnete Etikettiereinrichtung 9 in Tätigkeit. Soll auf Produkt B umgestellt werden, fährt die Einrichtung 9/A zusammen mit der Einrichtung 9/B nach rechts, wodurch die Einrichtung 9/B fluchtend zur Tiefziehstellung 3 steht und tätig werden kann. Entsprechendes gilt sinngemäß für die Einrichtungen 9/C/D.

Es wäre zwar möglich, auch die Siegelstation IV und die Stanzstation V sinngemäß vierteilig zu gliedern, was allerdings mit einem zusätzlichen Aufwand und einer entsprechenden Verlängerung der Maschine verbunden wäre, der insoweit nicht gerechtfertigt erscheint, als die Verschlußbereiche der Packung nicht unbedingt bei einem Parameterwechsel mitberücksichtigt werden müssen. Vorteilhaft ist deshalb die Verpackungsmaschine diesbezüglich derart ausgebildet, daß die volumenunterschiedlichen Becherformen 4 in den Gruppen 2 A-D des Formwerkzeuges 1 in bezug auf die Versiegelungsfläche 13 jedes Einzelbechers 14 und bezogen auf deren Ausschnittsform 15 gleich ausgebildet sind. Hierzu wird auf die Fig. 4 bis 6 verwiesen. Durch die Beibehaltung von Form und Größe dieser Bereiche, die bei sonstigem Parameterwechsel ohne weiteres möglich ist, können auch bei erfolgtem Parameterwechsel die Siegel- bzw. Stanzwerkzeuge in den Stationen IV und V beibehalten werden.

Wie vorerwähnt und wie ohne weiteres aufgrund der Vorbeschreibung vorstellbar, ist das Ganze keineswegs zwingend daran gebunden, daß man für die Packungsausbildung ein warmverformbares Folienband durch die Maschine laufen läßt, sondern man kann dieses Prinzip durchaus auch mit Fertigbechern, die ggf. auch schon vordekoriert sein können, betreiben. Hierfür ist lediglich die Tiefziehstation I durch eine entsprechende Anzahl von Fertigbecherstapelmagazinen 16 zu ersetzen und der Folienbanddurchlauf durch ein Bechertrag- und -förderelement 17, wie dies stark schematisiert in Fig. 3 angedeutet ist. Sofern die Fertigbecher schon vordekoriert sind, wird natürlich eine Etikettiereinrichtung 9 entbehrlich. Die Fertigbecher können hierbei ebenfalls in Gruppen aufgegeben bzw. gruppenweise, wie aus Fig. 7, 8 ersichtlich, gefüllt werden, und eine Stanzstation V wäre nur dann erforderlich, wenn eine Gruppe von Einzelbechern mit einer alle Einzelbecher erfassenden Deckelfolie abgedeckt würde. Da am Ende der Durchlaufförderstrecke 5 in diesem Falle Einzelbecher ankommen, ist die Stapeleinrichtung 19 durch einen für die Verpackung von Einzelbechern geeigneten Packer ersetzt, der die Einzelbecher zunächst in geeignete Kartonagen einbringt, die dann wiederum zu einem Gesamtstapel abgestapelt werden.

Mit 21 ist der Schaltschrank der Maschine bezeichnet. 22 stellt den Zentralcomputer dar, von dem aus die entsprechenden Befehle an den Schaltschrank 21, aber auch zu den einzelnen Vorratsbehältern 7/A-D mit den Füllventilen 10 und die Deckelfolienvorratsschächte 11/A-D und, wenn vorhanden, auch zu den Etikettiereinrichtungen 9/A-D gegeben werden. Dargestellt ist nur die Kabelführung zu den Vorratsbehältern 7/A-D. 23 sind bspw. Kunden- und Bestellcomputer, die mit dem Zentralcomputer 22 in Fernverbindung stehen können, so daß von Bestellern die Chargenbestellungen direkt in den Zentralcomputer 22 eingegeben werden können.

## Patentansprüche

1. Verpackungsmaschine mit Folienbanddurchlauf zum kontinuierlich taktweisen Ausformen, Füllen, Verschließen und mindestens gruppenweisen Vereinzeln von Bechern, bestehend aus längs der Durchlaufstrecke (5) eines von einer Vorratsrolle (20) abziehbaren Folienbandes angeordneten Tiefzieh-, Füll-, Abdeckel-, Siegel- und Vereinzelungsstationen (I–V), wobei das Formwerkzeug (1) der Tiefziehstation (I) mit mehreren hintereinander und nebeneinander angeordneten Becherformen (4) ausgestattet ist und die in Durchlaufrichtung dahinter angeordnete, automatisch betätigbare Füllstation (II) einen Produktbehälter (7) mit mehreren, zu den ausgeformten Bechern führenden Produktzuleitungen (6) aufweist, **dadurch gekennzeichnet,** daß das Formwerkzeug (1) der Tiefziehstation (I) mit mehreren Gruppen (2) volumenunterschiedlicher Becherformen (4) versehen ist und jede Gruppe (2) des Formwerkzeuges wahlweise automatisch mit dem Formwerkzeug (1) in die Tiefziehstellung (3) zum durchlaufenden Folienband einstellbar ausgebildet ist, daß die hinter der Tiefziehstation (I) angeordnete Füllstation aus mehreren, wahlweise betätigbaren, in der Zahl der Anzahl der Gruppen (2) entsprechenden Füllstationen (II) gebildet ist, die hintereinander über der Durchlaufstrecke (5) angeordnet sind, wobei die Produktzuleitungen (6) der Füllstationen (II) zu einer entsprechenden Anzahl von Produktvorratsbehältern (7) geführt sind und daß die hinter den Füllstationen (II) angeordnete Abdeckelstation (III) aus mehreren, der Anzahl der Gruppen (2) entsprechenden, wahlweise automatisch betätigbaren Abdeckeleinrichtungen (8) gebildet ist.

2. Verpackungsmaschine nach Anspruch 1, **dadurch gekennzeichnet,** daß im Bereich der Tiefziehstation (I) neben der Durchlaufstrecke (4) mehrere in der Zahl der Anzahl der Becherformgruppen (2) entsprechende Etikettierungseinrichtungen (9) angeordnet und diese wahlweise in die gleiche Tiefziehstellung (3) einstellbar ausgebildet sind.

3. Verpackungsmaschine nach Anspruch 1 oder 2, **dadurch gekennzeichnet,** daß die Füllstationen (II) durch die Enden (6') der Produktzuleitungen (6) gebildet und an den Enden (6') automatisch betätigbare Füllventile (10) angeordnet sind.

4. Verpackungsmaschine nach einem der Ansprüche 1 bis 3, **dadurch gekennzeichnet,** daß die Abdeckeleinrichtung (8) aus Deckelfolienvorratsschächten (11) gebildet und zwischen diesen und der Foliendurchlaufstrecke (5) Abnahme- und Übergabeelemente (12) für die jeweils eine ganze Bechergruppe abdeckenden Deckelfolien angeordnet ist.

5. Verpackungsmaschine nach einem der Ansprüche 1 bis 4, **dadurch gekennzeichnet,** dß die volumenunterschiedlichen Becherformen (4) in den Gruppen (2) des Formwerkzeuges (1) der Tiefziehstation (I) in bezug auf die Versiegelungsfläche (13) jedes Einzelbechers (14) und bezogen auf deren Ausschnittsform (15) gleich ausgebildet sind.

6. Verpackungsmaschine nach einem der Ansprüche 2 bis 5, **dadurch gekennzeichnet,** daß die Etikettiereinrichtungen (9) beidseitig zur Foliendurchlauf strecke (5) jeweils fluchtend in die Tiefziehstellung (3) verschiebbar angeordnet sind.

7. Verpackungsmaschine nach einem der Ansprüche 1 bis 6, **dadurch gekennzeichnet,** daß das mindestens zwei Becherformengruppen (2) aufweisende Formwerkzeug (1) in Form einer mit jeweils einer Gruppe (2) in Tiefziehstellung (3) schwenkbaren, drehbar gelagerten und auf- und abbewegbaren Trommel (1') ausgebildet ist.

8. Verpackungsmaschine nach einem der Ansprüche 1, 3, 4 und 6, **dadurch gekennzeichnet,** daß die Tiefziehstation (I) durch eine entsprechende Anzahl von Fertigbecherstapelmagazinen (16) und der Folienbanddurchlauf durch ein Bechertrag- und -förderelement (17) ersetzt ist.

## Revendications

1. Machine d'emballage avec passage à mouvement continu et cadencé d'une bande en feuille pour le formage, le remplissage, la fermeture et la séparation au moins par groupes de récipients, constituée, par des stations d'emboutissage profond, de remplissage, de fermeture, de scellement et de séparation (I–V), disposées le long du parcours de passage d'une bande en feuille prélevable sur un rouleau d'approvisionnement (20), sur laquelle l'outil de formage (1) de la station d'emboutissage profond (I) est équipé de plusieurs formes de récipients (4) disposés en série et côte à côte et sur laquelle la station de remplissage (II) commandable automatiquement, qui est disposée à la suite dans le sens de passage, présente un récipient de produit (7) avec plusieurs conduites d'amenée du produit (6) aboutissant aux récipients formés, caractérisée en ce que l'outil de formage (1) de la station d'emboutissage profond (I) est pourvu de plusieurs groupes (2) de formes de récipients (4) de volume différent et en ce que chaque groupe (2) de l'outil de formage est réalisé avec une possibilité de réglage automatique à volonté de la position d'emboutissage profond (3) de l'outil de formage (1) par rapport à la bande en feuille passante, en ce que la station de remplissage disposée derrière la station d'emboutissage profond (I) est constituée par plusieurs stations de remplissage (II), commandables à volonté, en nombre correspondant au nombre des groupes (2), qui sont disposées à la suite sur le parcours de passage (5), dont les conduites d'amenée du produit (6) aux stations de remplissage (II) sont reliées à un nombre correspondant de récipients d'approvisionnement du produit (7) et en ce que la station (III) disposée derrière la station de remplissage est constituée par plusieurs dispositifs de mise en place de couvercles (8) à commande automatique à volonté, dont le nombre correspond à celui des groupes.

2. Machine d'emballage selon la revendication 1, caractérisée en ce qu'il est disposé dans le secteur de la station d'emboutissage profond (1), à côté du parcours de passage (4), plusieurs dispositifs à étiqueter (9) correspondant en nombre au nombre de groupes de formes de récipient (9), qui sont réalisés avec une possibilité de réglage à volonté sur la même position d'emboutissage profond (3).

3. Machine d'emballage selon la revendication 1 ou 2, caractérisée en ce que les stations de remplissage (II) sont constituées par les extrémités (6') des conduites d'amenée du produit et en ce que des soupapes de remplissage (10) à commande automatique (10) sont disposées aux extrémités (6').

4. Machine d'emballage selon l'une des revendications 1 à 3, caractérisée en ce que le dispositif de mise en place de couvercles (8) est constitué par des puits d'approvisionnement en feuilles de couvercle (11) et en ce qu'il est disposé entre ces derniers et le parcours de passage de la bande en feuille (5) des éléments de réception et de remise (12) des feuilles de couvercle recouvrant respectivement tout un groupe de récipients.

5. Machines d'emballage selon l'une des revendications 1 à 4, caractérisée en ce que les formes de récipients (4), de volume différent, des groupes (2) de l'outil de formage (1) de la station d'emboutissage profond (I) sont réalisées de manière identique, en ce qui concerne la surface de scellement (13) de chacun des récipients (14) et la forme de leur découpe (15).

6. Machine d'emballage selon l'une des revendications 2 à 5, caractérisée en ce que les dispositifs à étiqueter (9) sont disposés des deux côtés par rapport au parcours de passage de la feuille (5), avec une mobilité leur permettant de s'aligner sur la position d'emboutissage profond (3).

7. Machine d'emballage selon l'une des revendications 1 à 6, caractérisée en ce que l'outil de formage (1) présentant au moins deux groupes de formes de récipients (2) est réalisé sous forme d'un tambour (1') déplaçable vers le haut et vers le bas, monté mobile en rotation et pivotant avec chacun des groupes (2) en position d'emboutissage profond.

8. Machine d'emballage selon l'une des revendications 1, 3, 4 et 6, caractérisée en ce que la station d'emboutissage profond est remplacée par un nombre correspondant de magasins d'empilage de récipients finis (16) et le passage de la bande en feuille par un élément de chargement et de transport de récipients (17).

**Claims**

1. Packaging machine with a through running sheet strip, for continuously in timed manner forming, filling, sealing and at least in sets separating cups comprising deep-drawing, filling, covering, sealing and separating stations (I–V) arranged along the travel path (5) of a sheet strip which can be pulled from a supply roll (20), the forming tool (1) of the deep-drawing station (I) being equipped with a plurality of cup-shaped dies (4) disposed side by side and behind one another, and the automatically actuable filling station (II) arranged after it in the direction of travel comprising a product container (7) having a plurality of product supply lines (6) leading to the formed cups, characterised in that the forming tool (1) of the deep-drawing station (I) is provided with a plurality of sets (2) of cup-shaped dies (4) of different volumes and each set (2) of the forming tool is adapted to be selectively adjusted, automatically with the forming tool (1), into the deep-drawing position (3) relative to the continuous sheet strip, that the filling station arranged after the deep-drawing station (I) is formed from a plurality of selectively actuable filling stations (II) the number of which corresponds to the number of sets (2), these filling stations (II) being arranged one after the other above the path of travel (5), the product supply lines (6) of the filling stations (II) leading to a corresponding number of product storage containers (7), and that the covering station (III) located after the filling stations (II) is formed of a plurality of covering devices (8), corresponding to the number of sets (2), which are selectively automatically actuable.

2. Packaging machine according to claim 1, characterised in that in the region of the deep-drawing station (I) adjacent the path of travel (4) there are a plurality of labelling devices (9) corresponding in number to the number of sets (2) of cup-shaped dies and these labelling devices (9) are adapted to be selectively adjustable into the same deep-drawing position (3).

3. Packaging machine according to claim 1 or 2, characterised in that the filling stations (II) are formed by the ends (6') of the product supply lines (6) and automatically actuable filling valves (10) are provided at the ends (6').

4. Packaging machine according to one of claims 1 to 3, characterised in that the covering device (8) is made up of cover foil supply chutes (11) and between them and the path of travel (5) of the film there are removal and transfer members (12) for the cover foils which are to cover a complete set of cups.

5. Packaging machine according to one of claims 1 to 4, characterised in that the cup-shaped dies (4) of different in the sets (2) of the forming tool (1) of the deep-drawing station (I) are identically formed in respect of the sealing surface (13) of each individual cup (14) and in respect of their cut-out shape (15).

6. Packaging machine according to one of claims 2 to 5, characterised in that the labelling devices (9) are arranged on both sides of the path of travel (5) of the sheet and are respectively capable of being moved in aligned manner into the deep-drawing position (3).

7. Packaging machine according to one of claims 1 to 6, characterised in that the forming tool (1) which comprises at least two sets (2) of cup-shaped dies is in the form of a rotatably mounted drum (1') capable of moving up and down and pivotable with one set (2) into the deep-drawing position (3).

8. Packaging machine according to one of claims 1, 3, 4 and 6, characterised in that the deep-drawing station (I) is replaced by a corresponding number of stacking storage means (16) for finished cups and the through running sheet strip is replaced by a cup carrying and conveying unit (17).

Fig.1

Fig.2

EP 0 234 371 B1

Fig.3

Fig.4

Fig.5

Fig.6

Fig.7

Fig.8